Europäisches Patentamt

European Patent Office

Office européen des brevets

(11) Veröffentlichungsnummer: **0 098 548**
A2

# (12) EUROPÄISCHE PATENTANMELDUNG

(21) Anmeldenummer: **83106440.7**

(22) Anmeldetag: **01.07.83**

(51) Int. Cl.³: **G 02 B 7/26**

(30) Priorität: **09.07.82 DE 3225657**

(43) Veröffentlichungstag der Anmeldung: **18.01.84**
Patentblatt 84/3

(84) Benannte Vertragsstaaten: **BE CH FR GB IT LI NL SE**

(71) Anmelder: **KRONE GmbH, Goerzallee 311,
D-1000 Berlin 37 (DE)**

(72) Erfinder: **Bischoff, Rainer, Prinz-Handjerystrasse 32a,
D-1000 Berlin 37 (DE)**
Erfinder: **Röseler, Volker, Bochumer Strasse 25,
D-1000 Berlin 21 (DE)**
Erfinder: **Le-Hiep, Tuyen, Dr., Ribeckweg 14,
D-1000 Berlin 37 (DE)**

(74) Vertreter: **Patentanwälte Beetz sen. - Beetz jun. Timpe -
Siegfried - Schmitt-Fumian, Steinsdorfstrasse 10,
D-8000 München 22 (DE)**

(54) **Einrichtung zur Herstellung einer mechanischen, nicht lösbaren Spleissverbindung zweier Lichtwellenleiter aus Quarzglas.**

(57) Gegenstand der Erfindung ist eine Einrichtung, bestehend aus einem gekrümmten transparenten Stab (1), der eine Dreiecksprofil-Bohrung (2) und an den Stirnseiten je einen Einführungsabsatz (1a, 1b) aufweist.

Die Einführungsabsätze (1a, 1b) besitzen je eine Dreiecks-Einführungsnut (2a, 2b), die der Dreiecksprofil-Bohrung (2) spiegelbildlich gegenüberliegen und zusätzlich zur Aufnahme eines Klebstoffes (3) zur Lagesicherung der Lichtwellenleiter (4, 4a) dienen.

0098548

KRONE GmbH
Goerzallee 311
D-1000 Berlin 37

Einrichtung zur Herstellung einer mechanischen,
nicht lösbaren Spleißverbindung zweier Lichtwellenleiter aus Quarzglas

---

Die Erfindung betrifft eine Einrichtung zur Herstellung
einer mechanischen, nicht lösbaren Spleißverbindung zweier
Lichtwellenleiter aus Quarzglas.

Bei einem optischen Übertragungssystem ist es erforderlich, Lichtwellenleiter sowohl miteinander als auch mit
einem Empfänger oder Sender zu verbinden. Bei der Verbindung von Lichtwellenleitern treten aber immer wieder Probleme auf, insbesondere dann, wenn hohe Ansprüche an die Verbindungsstelle gestellt werden.

Ein Achsversatz, ein Winkelversatz, ein Frontflächenabstand oder eine Beschädigung der Lichtwellenleiter-Endflächen führen zu einer Dämpfung der Lichtleistung beim
Durchlaufen der Verbindungsstelle.

Die bekannten Spleißverbindungen erreichen die erforderliche Ausrichtung der Lichtwellenleiter mit unterschied-125-(x 2226)-TE

0098548

lichem Aufwand. Sie besitzen jedoch komplizierte und auf enge Toleranzen hergestellte Teile, die zwar insbesondere in Verbindung mit größeren Lichtwellenleitern oder Lichtwellenleiter-Bündeln zufriedenstellend arbeiten, doch selbst bei Normung und Herstellung in großen Stückzahlen zu unverhältnismäßig hohen Kosten führen würden.

Aus der DE-OS 28 40 101 ist beispielsweise eine lösbare Verbindung, insbesondere Steckverbindung, zur Kopplung von mindestens zwei Lichtwellenleitern bekannt.

Hier werden die Lichtwellenleiter in v-förmigen Nuten zentriert und mit Hilfe eines Klemmstückes stirnseitig bündig geklemmt.

Nachteilig sind auch die hohen Kosten, welche beim Herstellen der eng tolerierten Teile entstehen.

Aufgabe der vorliegenden Erfindung ist daher, eine Einrichtung zu schaffen, die die erforderliche Verbindung auf eine einfache, genaue und billige Weise bei einer geringen Dämpfung der geführten Lichtleistung erreicht.

Diese Aufgabe wird erfindungsgemäß dadurch gelöst, daß in einem gekrümmten transparenten Stab eine Dreiecksprofil-Bohrung und an den Stirnseiten des Stabes je ein Einführungsabsatz, der jeweils eine der Dreiecksprofil-Bohrung spiegelbildlich gegenüberliegende Dreiecks-Einführungsnut aufweist, angeordnet sind.

Vorzugsweise dienen die Einführungsabsätze zur Aufnahme eines Klebstoffes zur Lagesicherung der Lichtwellenleiter.

Die Spleißverbindung der Lichtwellenleiter wird am besten mit einem Betrachtungsmikroskop hergestellt. Hierbei wird zunächst ein Lichtwellenleiter bis zur Mitte in die Dreiecksbohrung des Stabes eingeführt und mit Klebstoff festgelegt.

Anschließend wird der zweite Lichtwellenleiter von der anderen Seite eingeführt.

Die Enden der beiden Lichtwellenleiter legen sich, bedingt durch die Krümmung der Dreiecksprofil-Bohrung, zwangsläufig in die selbe Ecke des Dreiecks.

Mit Hilfe eines geeigneten Meßgerätes (z. B. Rückstreumeßplatz) wird der zweite Lichtwellenleiter justiert, bis die minimale Dämpfung erreicht ist. Mit der Festlegung des zweiten Lichtwellenleiters ist die Verbindung fertiggestellt.

Die Erfindung wird anhand eines in der Zeichnung veranschaulichten Ausführungsbeispieles näher erläutert; darin zeigen:

| Fig. 1 | den gekrümmten Stab mit zwei eingeführten Lichtwellenleitern nach der Erfindung; |
| --- | --- |
| Fig. 2 | den Stab in der Vorderansicht; |
| Fig. 3 | den Stab in der Draufsicht; und |
| Fig. 4 | die Stirnseite des Stabes. |

0098548

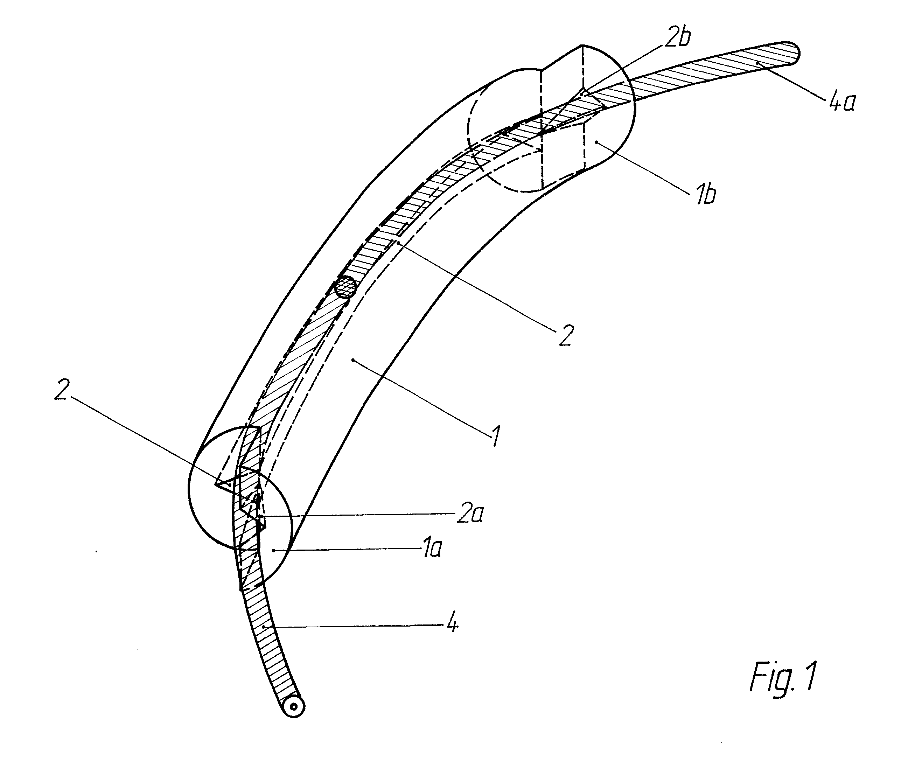

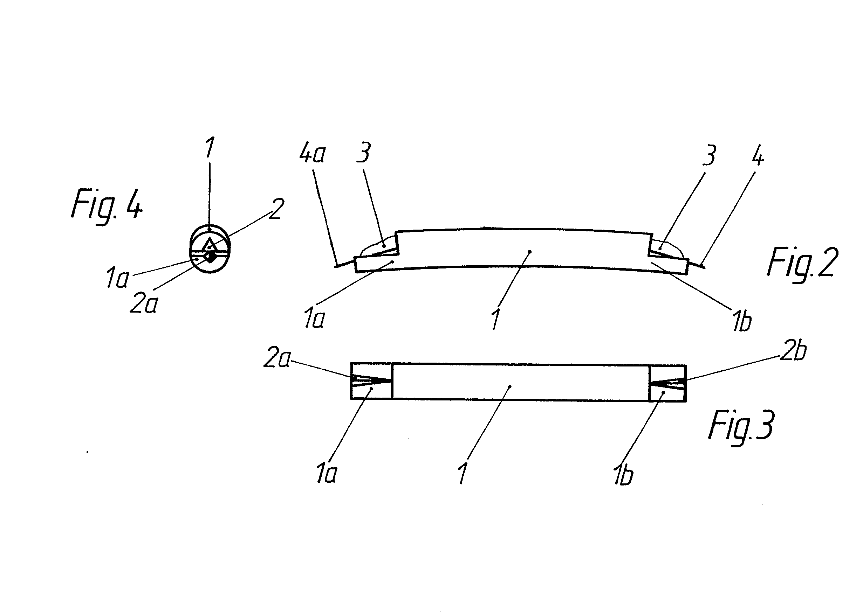

Wie die Fig. 1 zeigt, besteht die Einrichtung zur Herstellung der Spleißverbindung aus einem gekrümmten transparenten Stab 1. Dieser Stab 1 besitzt eine Dreiecksprofil-Bohrung 2.

An den Stirnseiten des Stabes 1 ist, wie auch die Fig. 2 und 3 zeigen, jeweils ein Einführungsabsatz 1a, 1b angeordnet.

Diese Einführungsabsätze 1a, 1b besitzen Dreiecks-Einführungsnuten 2a, 2b, die zur Dreiecksprofil-Bohrung 2 spiegelbildlich gegenüberliegen.

Nach dem Einführen und Justieren der Enden der beiden Lichtwellenleiter 4, 4a werden diese mittels eines Klebstoffes 3, der auf die Einführungsabsätze 1a, 1b geklebt wird, gegen ein Herausrutschen gesichert.

0098548

- 1 -

Patentansprüche
---------------

1. Einrichtung zur Herstellung einer mechanischen, nicht lösbaren Spleißverbindung zweier Lichtwellenleiter aus Quarzglas,
   dadurch gekennzeichnet,
   daß in einem gekrümmten transparenten Stab (1) eine Dreiecksprofil-Bohrung (2) und an den Stirnseiten des Stabes (1) je ein Einführungsabsatz (1a, 1b), der jeweils eine der Dreiecksprofil-Bohrung (2) spiegelbildlich gegenüberliegende Dreiecks-Einführungsnut (2a, 2b) aufweist, angeordnet sind.

2. Einrichtung nach Anspruch 1,
   dadurch gekennzeichnet,
   daß die Einführungsabsätze (1a, 1b) zur Aufnahme eines Klebstoffes (3) zur Lagesicherung der Lichtwellenleiter (4, 4a) dienen.

125-(x 2226)-TE

Fig.1

Fig. 4

Fig. 2

Fig. 3

2/2

0098548